# EUROPEAN PATENT SPECIFICATION

(11) **EP 3 780 966 B1**
(45) Date of publication and mention of the grant of the patent: **07.12.2022**
(21) Application number: 19718175.3
(22) Date of filing: 18.04.2019
(51) Int. Cl.: A23G 7/00, A23G 3/12

(54) **IMPROVED STICK SUPPLY UNIT FOR A LOLLIPOP FORMING MACHINE**
VERBESSERTE STIELZUFÜHREINHEIT FÜR EINE LUTSCHERFORMMASCHINE
UNITÉ D'ALIMENTATION EN BÂTONS AMÉLIORÉE POUR UNE MACHINE DE FORMATION DE SUCETTES

(30) Priority: 20.04.2018 EP 18168533
(43) Date of publication of application: 24.02.2021
(73) Proprietor: GEA Food Solutions Weert B.V., 6006 RV Weert (NL)
(72) Inventor: BAUMEISTER, Bruno Gerfried, 52078 Aachen (DE)
(74) Representative: Kutzenberger Wolff & Partner
(86) International application number: PCT/EP2019/060162
(87) International publication number: WO 2019/202109

(56) References cited:
- WO-A1-03/026434
- DE-A1- 3 004 819
- NL-A- 6 410 108

## Description

The present invention relates to a stick supply unit for a lollipop forming unit, which supplies sticks to a rotating stick drum, wherein the stick drum comprises a multitude of indentations at its circumference each accommodating a single stick.

Such units are known from the state in the art and are utilized to provide the sticks that are inserted into the head of a lollipop. The sticks are provided to a stick drum, which normally corotates together with a forming drum, which forms the heads of a lollipop out of a strand of material, often sugar material. The units according to the state in the art have disadvantage that the sticks have to be of a high quality, particularly regarding the tolerance of the shape and the elasticity of the stick. In case this tolerance is too high, the stick supply to the forming machine is not continuous.

DE 30 04 819 A1 and NL 6 410 108 A show units with a stick drum. WO 03/026434 A1 show a stick supply unit with an elongate, reciprocal device.

It is therefore the objective of the present invention to provide a stick supply unit that overcomes the deficiencies of the state in the art.

The problem is solved with a stick supply unit for a lollipop forming unit, which supplies sticks to a rotating stick drum, wherein the stick drum comprises a multitude of indentations at its circumference each accommodating a single stick, wherein the radius of a section of the circumference of the stick drum located between two adjacent indentations increases, preferably in the direction of rotation of the stick drum.

The present invention relates to a lollipop forming unit, which supplies sticks to a rotating stick drum. The stick drum corotates together with a lollipop forming drum, which comprises a multitude of die-units, which each can form the head of a lollipop out of a strand material. The stick drum is utilized to provide a stick for each head of a lollipop. The stick drum comprises a multitude of indentations at its outer circumference each accommodating a single stick. The indentations are each preferably formed as a groove in the circumference of the stick drum. Each indentation preferably extends parallel to the axis of rotation of the stick drum. The indentations are preferably provided equidistantly around the outer circumference of the stick drum. Each indentation is preferably designed such, that it can at least partially accommodate a stick. Consequently, each indentation has a cross-section, which is designed such that it can partially accommodate the stick for the lollipop. Preferably, the cross-section of the indentation is designed, at least partially, as a segment of a circle, more preferably as a 180°-segment of a circle. Preferably, the cross-section of the indentation is U-shaped, wherein, more preferably one leg of the U is shorter than the other and even more preferably, the base of the U is round, preferably designed as a segment of a circle. Relative to the direction of rotation, the upstream leg is longer than the downstream leg. According to another preferred embodiment, the cross-section is L-shaped, wherein the short leg of the L is preferably round, preferably designed as the segment of a circle.

As already disclosed, the stick drum comprises a multitude of indentations at its outer circumference. Two indentations are separated by a section of the circumference of the drum. According to the present invention, the radius of the outer circumference of the stick drum, which is located between two adjacent indentations, increases, preferably in the direction of rotation of the stick drum. The radius of the outer circumference is the local distance between to centre of the stick drum and the respective point at the outer circumference of the stick drum. According to the invention, this radius is not constant, but increases. The section between two indentations can be linear, but preferably, the section has a curved shape, wherein the radius of the curve may change and/or the centre of the curve is not identical with the centre of the stick drum. The curve can be a segment of a spiral and/or parabola.

An increase of the radius in the direction of rotation means that if you walk along the drum in its direction of rotation, while the drum does not rotate, its radius increases between two adjacent indentations.

According to another embodiment or a preferred embodiment of the present invention, the cross-section of the indentation is asymmetrical relative to its middle axis.

Preferably, the cross section of the indentation is U-shaped, wherein one leg of the U is shorter than the other and preferably, the base of the U is round, preferably designed as a segment of a circle. According to another preferred embodiment, the cross-section is L-shaped, wherein the short leg of the L is round, preferably designed as the segment of a circle.

According to another inventive or preferred embodiment of the present invention, the inventive stick supply unit comprises a stick hopper with a stick reservoir and stick slot, which connects the stick reservoir and a stick outlet, wherein at least at the outlet, the width of stick slot is larger than the diameter of the stick and smaller than twice the diameter of the stick.

According to this embodiment of the present invention, a stick slot is provided between a stick reservoir and a stick outlet of the stick supply unit. This slot may be linear but is preferably curved. At least at the outlet, but preferably at least essentially the entire length of this slot has a width that is larger than the diameter of the stick and smaller than twice the diameter of the stick. This assures that only one stick is provided to each indentation and that the sticks are well guided in the slot.

According to yet another preferred inventive or preferred embodiment of the present invention, the stick supply unit may comprise means to reversibly block the outlet of the slot.

This inventive or preferred embodiment has the advantage that no sticks are wasted in cases there is, for example, no strand-material.

Preferably or inventively the stick supply unit comprises means to advance the sticks in the slot. This can be, for example a rotating unit, for example a wheel with these at its circumference, and/or a vibration unit, that advances the sticks in the slot. It also can be, for example a means with an oscillating movement, for example a lever or push rod that is driven by a pneumatical cylinder or a motor.

The inventions are now explained according to Figures 1 - 4. These explanations apply to all inventions likewise. The examples do not limit the scope of protection.
- Figure 1: shows the inventive stick supply unit.
- Figures 2 and 3: show details of the means to block the exit of the slot.
- Figure 4: shows details of the outer circumference of the stick drum 3.

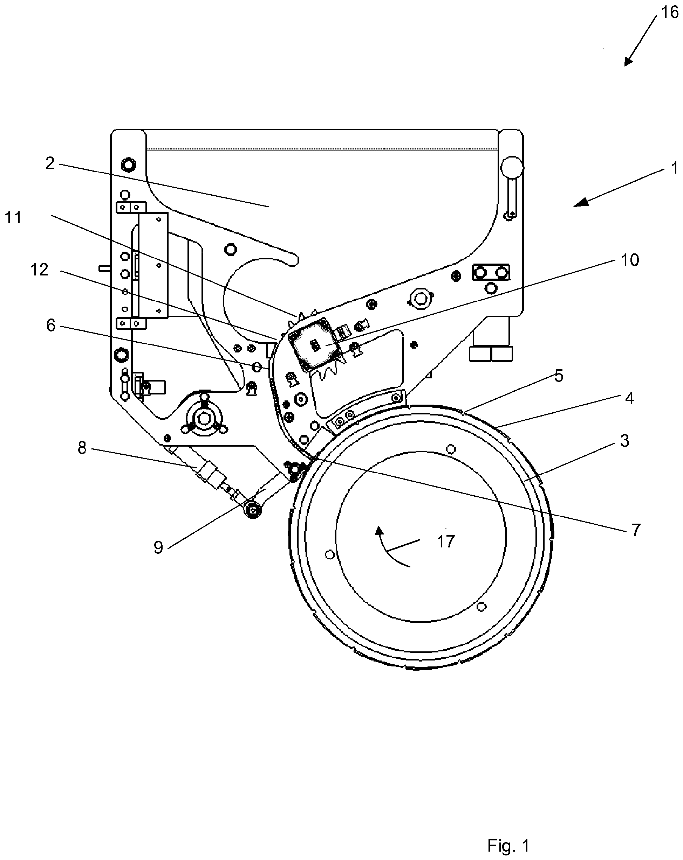

Figure 1 shows the inventive stick supply unit 16, which comprises a stick hopper 1 with a stick reservoir 2, which accommodates a multitude of sticks (not depicted) which are utilized for a lollipop production. The stick supply unit, here the stick hopper, further comprises a stick slot 6 which connects the stick reservoir with the outlet 7 of the sticks. At the stick separation position 12, the sticks are singularized and inserted into the slot 6, in which they are advanced in parallel. At the position 7, the sticks are handed over to the stick drum 3. In order to advance the sticks through the slot and/or to avoid bridging, means 10, 11, here a rotating wheel or drum with teeth at its circumference are provided. The wheel is driven by a motor 10, here in counter-clock-wise rotation. The inventive stick supply unit may further comprise means 8, 9 to block the outlet of the slot, so that the stick supply can be stopped as needed.

At the hand over position 7, the sticks are supplied to a stick drum 3, which rotates, as depicted by arrow 18 here in clock-wise direction. The stick drum comprises a multitude of indentations 5, here grooves, which each can accommodate a stick. The stick drum 3 transports the sticks from the hand over position 7 to an insertion position, in which the sticks are pushed into the formed or preformed head of a lollipop. This insertion position is here at the twelve-o'clock position. Preferably, the hopper comprises means, for example a plate which holds the sticks in the indentations until they reach the insertion position. The indentations 5 are spaced, preferably equidistantly around the circumference of the stick drum 3. Two adjacent indentations are separated by a section 4 of the outer circumference 15 of the stick drum. The indentations are preferably as grooves or slots, which extend in parallel to the axis of rotation of the stick drum.

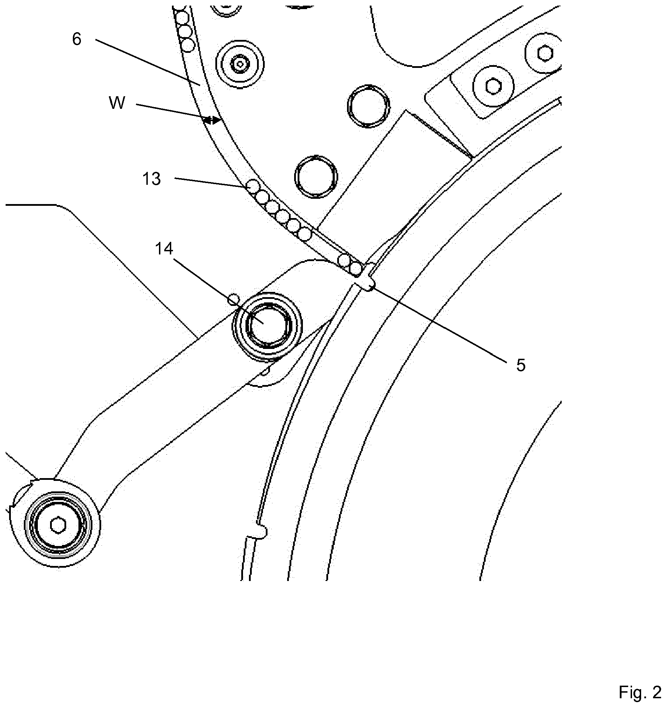

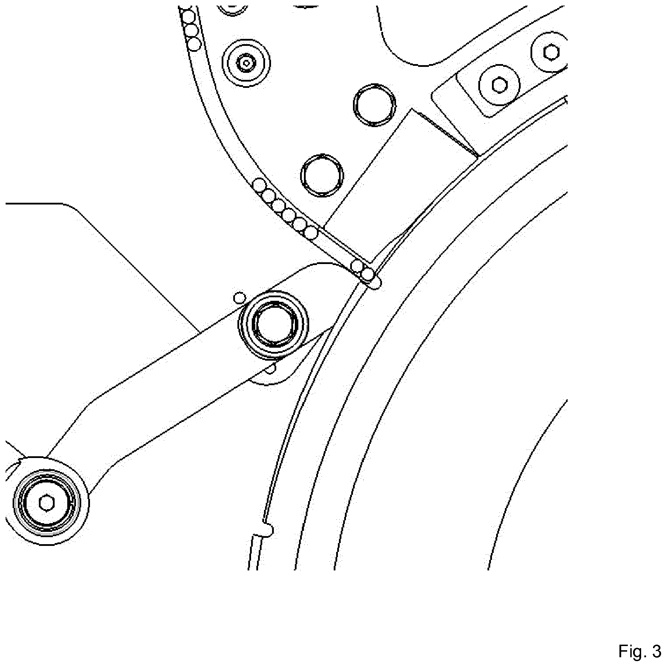

Figures 2 and 3 show details of the means to block the outlet of the slot, so that if needed no sticks can exit the slot 6. The means are in the present case a lever 9, which rotates around the pivot point 14, driven by drive 8, here a piston, which can rotate the lever 9 from a remote- into a closing-position and vice versa. Figure 2 shows the lever in the closing position, while Figure 3 depicts the lever in the remote position. The drive is preferably connected to a control system, which controls the position of the lever. In case there is no strand-material or another problem occurs, the slot 6 is automatically closed, so that no sticks are supplied to the indentations 5.

Particularly Figure 2 also shows details of the slot 6, especially its width W, which is one dimension perpendicular to the direction of movement of the sticks 13. This width W is designed larger than the cross-section of the sticks 13. However, the width W is also smaller than twice the cross sectional dimension of the sticks 13.

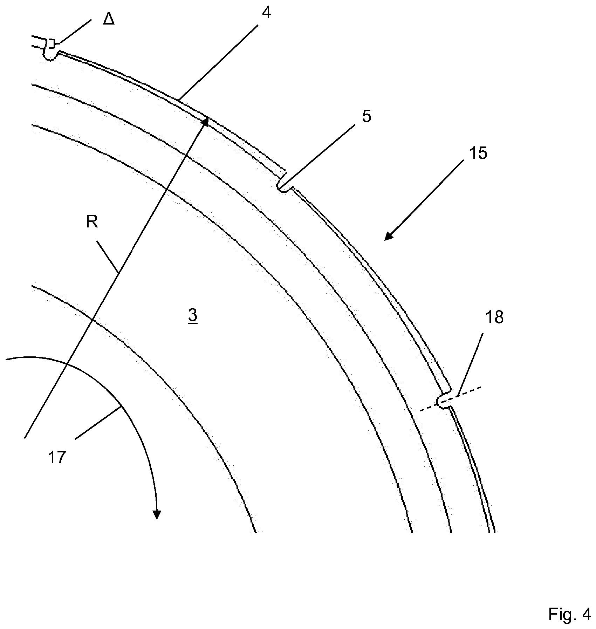

Figure 4 shows details of the outer circumference of the drum 3. Particularly, the shape of the cross-section of the indentations 5 is depicted, which is in the present case U-shaped. In the present case, the U comprises a round base, preferably the segment of a circle. Furthermore, the U preferably comprises two legs, wherein the leg which is, relative to the direction of rotation 17 positioned upstream is longer than the downstream leg. The difference is indicated by "Δ". This is one example how the cross-section of the indentation 5 can be designed asymmetrically relative to its middle axis 18.

Figure 4 also depicts that the extension of the outer circumference of the stick drum changes. Between two adjacent indentations 5, the extension of the outer circumference of the stick drum increase in the direction of rotation 17 of the stick drum 3. This is depicted by the radius R measured between the center of the stick drum and the outer circumference of the stick drum. Due to this increase the asymmetry of the indentation can be realized. The increase assures that the stick is always pressed into the indentation. According to one preferred embodiment, the section 4 of the outer diameter of the stick drum between two adjacent indentations is a segment of a plane spiral. According to another preferred embodiment, the section 4 of the outer diameter of the stick drum is a circle, wherein the center of the circle is different from the middle axis of the stick drum. According to yet another preferred embodiment of the present invention, the section 4 is a section of a parabola. The section 4 can also consist segments of circles with different radii.

### Reference signs

- 1.: Stick hopper
- 2.: Stick reservoir
- 3.: Stick drum
- 4.: section, section with an increasing diameter
- 5.: Indentation, slot, groove
- 6.: Stick slot
- 7.: Stick handover position, outlet of the stick slot 6
- 8.: Drive
- 9.: Lever
- 10.: Drive
- 11.: Stick advancement means, wheel
- 12.: Stick separation position
- 13.: Stick
- 14.: Pivot point
- 15.: circumference of the stick drum
- 16.: Stick supply unit
- 17.: Direction of rotation
- 18.: Middle-axis of the cross section of the indentation
- R: radius
- W: width of the channel
- Δ: Height difference

## Claims

1. Stick supply unit (16) for a lollipop forming unit, which supplies sticks (13) to a rotating stick drum (3), wherein the stick drum comprises a multitude of indentations (5) at its circumference (15) each accommodating a single stick (13), **characterized in that** the radius of a section (4) of the circumference of the stick drum located between two adjacent indentations (5) increases, preferably in the direction of rotation (17) of the stick drum.

2. Stick supply unit (16) according to claim 1 or the preamble of claim 1, **characterized in that** the cross section of the indentation (5) is asymmetrical relative to its middle axis (18).

3. Stick supply unit (16) according to claim 2, **characterized in that** the cross-section of the indentation is U-shaped, with a base and two legs, wherein one of the legs of the U is longer than the other.

4. Sticks supply unit (16) according to one of the preceding claims, wherein it comprises a stick hopper (1) with a stick reservoir (2) and stick slot (6), which connects the stick reservoir (2) and a stick outlet (7), **characterized in that** at least at the outlet, the width (W) of stick slot is larger than the diameter of the stick and smaller than twice the diameter of the stick (13).

5. Stick supply unit (16) according to the one of the preceding claims, **characterized in that** it comprises means (8, 9) to reversibly block the outlet.

6. Stick supply unit (16) according one of the preceding claims, **characterized in that** it comprises means (11) to advance the sticks (13) in the slot (6).

## Patentansprüche

1. Stielzuführeinheit (16) für eine Lutscherformeinheit, die einer sich drehenden Stieltrommel (3) Stiele (13) zuführt, wobei die Stieltrommel mehrere Vertiefungen (5) an deren Umfang (15) umfasst, die jeweils einen einzelnen Stiel (13) aufnehmen, **dadurch gekennzeichnet, dass** der Radius eines Abschnitts (4) des Umfangs der Stieltrommel, der sich zwischen zwei aneinander angrenzenden Vertiefungen (5) befindet, vorzugsweise in Drehrichtung (17) der Stieltrommel, zunimmt.

2. Stielzuführeinheit (16) nach Anspruch 1 oder der Präambel von Anspruch 1, **dadurch gekennzeichnet, dass** der Querschnitt der Vertiefung (5) in Bezug zu ihrer Mittelachse (18) asymmetrisch ist.

3. Stielzuführeinheit (16) nach Anspruch 2, **dadurch gekennzeichnet, dass** der Querschnitt der Vertiefung U-förmig ist, mit einer Basis und zwei Schenkeln, wobei ein Schenkel des Us länger ist als der andere.

4. Stielzuführeinheit (16) nach einem der vorstehenden Ansprüche, wobei sie einen Stieltrichter (1) mit einem Stielbehälter (2) und einem Stielschlitz (6), der den Stielbehälter (2) mit einem Stielauslass (7) verbindet, umfasst, **dadurch gekennzeichnet, dass** zumindest am Auslass die Breite (W) des Stielschlitzes größer ist als der Durchmesser des Stiels und kleiner als der doppelte Durchmesser des Stiels (13).

5. Stielzuführeinheit (16) nach einem der vorstehenden Ansprüche, **dadurch gekennzeichnet, dass** sie eine Einrichtung (8, 9) zum umkehrbaren Blockieren des Auslasses umfasst.

6. Stielzuführeinheit (16) nach einem der vorstehenden Ansprüche, **dadurch gekennzeichnet, dass** sie eine Einrichtung (11) zum Vorwärtsbewegen der Stiele (13) in den Schlitz (6) umfasst.

## Revendications

1. Unité d'approvisionnement en bâtonnets (16) pour une unité de formation de sucettes, qui approvisionne en bâtonnets (13) un tambour à bâtonnets (3) rotatif, le tambour à bâtonnets comprenant une pluralité d'évidements (5) au niveau de sa circonférence (15) recevant chacun un seul bâtonnet (13), **caractérisée en ce que** le rayon d'une section (4) de la circonférence du tambour à bâtonnets située entre deux évidements (5) adjacents augmente, de préférence dans la direction de rotation (17) du tambour à bâtonnets.

2. Unité d'approvisionnement en bâtonnets (16) selon la revendication 1 ou le préambule de la revendication 1, **caractérisée en ce que** la section transversale de l'évidement (5) est asymétrique relativement à son axe médian (18).

3. Unité d'approvisionnement en bâtonnets (16) selon la revendication 2, **caractérisée en ce que** la section transversale de l'évidement est en forme de U, avec une base et deux branches, une des branches du U étant plus longue que l'autre.

4. Unité d'approvisionnement en bâtonnets (16) selon l'une des revendications précédentes, celle-ci comprenant une trémie à bâtonnets (1) avec un réservoir de bâtonnets (2) et une fente à bâtonnets (6), qui relie le réservoir de bâtonnets (2) et une sortie de bâtonnets (7), **caractérisée en ce qu'**au moins au niveau de la sortie, la largeur (W) de la fente à bâtonnets est supérieure au diamètre du bâtonnet et inférieure au double du diamètre du bâtonnet (13).

5. Unité d'approvisionnement en bâtonnets (16) selon l'une des revendications précédentes, **caractérisée en ce qu'**elle comprend des moyens (8, 9) pour bloquer de manière réversible la sortie.

6. Unité d'approvisionnement en bâtonnets (16) selon l'une des revendications précédentes, **caractérisée en ce qu'**elle comprend des moyens (11) pour faire avancer les bâtonnets (13) jusque dans la fente (6).
